(19) Europäisches Patentamt
European Patent Office
Office européen des brevets

(11) EP 4 773 590 A1

(12) EUROPEAN PATENT APPLICATION
published in accordance with Art. 153(4) EPC

(43) Date of publication:
08.07.2026 Bulletin 2026/28

(21) Application number: 24858566.3

(22) Date of filing: 27.08.2024

(51) International Patent Classification (IPC):
H04N 7/18 (2006.01)   B65G 1/00 (2006.01)

(52) Cooperative Patent Classification (CPC):
B65G 1/00; B65G 43/00; G01P 3/00; G01V 8/10;
G06V 10/25; G06V 20/52; G08B 21/24; H04N 7/18

(86) International application number:
PCT/CN2024/114804

(87) International publication number:
WO 2025/045030 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.08.2023 CN 202311107431

(71) Applicant: KONE Corporation
00330 Helsinki (FI)

(72) Inventors:
• JUURIOKSA, Martti
  Suzhou, Jiangsu 215300 (CN)
• FAN, Jinquan
  Suzhou, Jiangsu 215300 (CN)

(74) Representative: Kolster Oy Ab
Salmisaarenaukio 1
P.O. Box 204
00181 Helsinki (FI)

(54) **MONITORING METHOD AND MONITORING APPARATUS FOR CONVEYING DEVICE**

(57) Provided is a monitoring method for a conveying device. The method comprises: acquiring data concerning the conveying status of a conveying device; on the basis of the data, identifying carriers that travel on the conveying device; in response to the carriers having been identified, detecting predefined information related to the carriers; on the basis of the detected predefined information, determining whether the carriers have been in a target condition; and when it is determined that the carriers have been in the target condition, generating prompt information corresponding to the target condition.

FIG. 1

**Description**

CROSS-REFERENCE TO RELATED APPLICATION(S)

This application claims the priority of Chinese Patent Application No. 202311107431.3 filed on August 30, 2023. The contents disclosed in the above Chinese patent application are hereby incorporated by reference in their entirety as part of this application.

TECHNICAL FIELD

This disclosure relates to a monitoring method and a monitoring apparatus for conveying device and particularly relates to a monitoring method for a carrier vehicle for boarding the conveying device, a monitoring apparatus for performing the monitoring method, a monitoring device including the monitoring apparatus, and a conveying system including the monitoring device.

BACKGROUND

Conveying device is widely used in sites such as supermarkets, shopping malls, stations, airports, and factories to facilitate the conveyance of passengers and/or related carrier vehicles. For example, escalators for shoppers and shopping carts are provided between floors in supermarkets, luggage conveyor belts for passengers and luggage carts are provided in airports, and goods conveyor belts for material carts are provided in factories, and the like. Carrier vehicles provide convenience to users, but at the same time, they also increase potential safety hazards. Performing monitoring on such conveying devices, especially on various aspects of the carrier vehicles, and issuing prompt information in a timely manner can advantageously avoid the potential safety hazards or reduce the severity of the consequences caused by such potential safety hazards.

SUMMARY

According to one aspect of an embodiment of this disclosure, a monitoring method for a conveying device is provided. The method comprises: obtaining data associated with a conveying state of the conveying device; identifying a carrier vehicle for boarding the conveying device based on the data; detecting predefined information associated with the carrier vehicle in response to identifying the carrier vehicle; determining whether the carrier vehicle is in a target condition based on the detected predefined information; and generating prompt information corresponding to the target condition in a case where it is determined that the carrier vehicle is in the target condition.

Optionally, the target condition comprises at least one of: the carrier vehicle being proximity to an entrance of the conveying device; the carrier vehicle being proximity to an exit of the conveying device; the carrier vehicle being on the conveying device and having relative motion with the conveying device; the carrier vehicle being too close to an adjacent carrier vehicle; excessive loads being on the carrier vehicle; and/or fall of a load from the carrier vehicle.

Optionally, the target condition comprises the carrier vehicle being proximity to an entrance of the conveying device; the predefined information comprises a distance between the carrier vehicle and the entrance of the conveying device; the determining comprises: determining that the carrier vehicle is proximity to the entrance based on the distance not exceeding a first threshold distance; and the prompt information comprises information for prompting to set a brake of the carrier vehicle to a brake position.

Optionally, the target condition comprises the carrier vehicle being proximity to an exit of the conveying device; the predefined information comprises a distance between the carrier vehicle and the exit of the conveying device; the determining comprises: determining that the carrier vehicle is proximity to the exit based on the distance not exceeding a second threshold distance; and the prompt information comprises information for prompting to set a brake of the carrier vehicle to a release position.

Optionally, the target condition comprises the carrier vehicle being on the conveying device and having relative motion with the conveying device; the predetermined information comprises a distance between the carrier vehicle and the entrance and a distance between the carrier vehicle and the exit; the determining that the carrier vehicle is on the conveying device comprises: determining that the carrier vehicle is on the conveying device based on both the distance between the carrier vehicle and the entrance and the distance between the carrier vehicle and the exit being less than a distance between the entrance and the exit; and the prompt information comprises information for prompting to set a brake of the carrier vehicle to a brake position.

Optionally, the target condition comprises the carrier vehicle being on the conveying device and having relative motion with the conveying device; the predefined information further comprises a change in the distance between the carrier vehicle and the entrance over time; the determining that the carrier vehicle has relative motion with the conveying device comprises: determining that the carrier vehicle has relative motion with the conveying device based on the distance between the carrier vehicle and the entrance being constant or decreasing over time.

Optionally, the target condition comprises the carrier vehicle being on the conveying device and having relative motion with the conveying device; the predefined information further comprises a moving speed of the carrier vehicle relative to a stationary reference object and a conveying speed of the conveying device; the determining that the carrier vehicle has relative motion with the conveying device further comprises: determining that the carrier vehicle has relative motion with the conveying device based on the distance between the carrier vehicle and the entrance increasing over time and an absolute value of a difference between the moving speed of the carrier vehicle and the conveying speed exceeding a speed difference threshold.

Optionally, the target condition comprises the carrier vehicle being too close to an adjacent carrier vehicle; the predefined information comprises a distance between the carrier vehicle and the adjacent carrier vehicle; the determining comprises: determining that the carrier vehicle is too close to the adjacent carrier vehicle based on the distance between the carrier vehicle and the adjacent carrier vehicle being less than a third threshold distance, and the prompt information comprises information for prompting that the carrier vehicle is too close to the adjacent carrier vehicle.

Optionally, the target condition comprises excessive loads being on the carrier vehicle; the predefined information comprises a dimension of the loads on the carrier vehicle; the determining comprises: determining that excessive loads are on the carrier vehicle based on the dimension of the loads exceeding a dimension threshold; and the prompt information comprises information for prompting to reduce the loads.

Optionally, the target condition comprises fall of a load from the carrier vehicle; the predefined information comprises a change in a dimension of the loads on the carrier vehicle over time; the determining comprises: determining the fall of the load from the carrier vehicle based on a percentage of the dimension of the loads decreasing over time exceeding a percentage threshold; and the prompt information comprises information for prompting the fall of the load from the carrier vehicle.

Optionally, detecting the moving speed of the carrier vehicle relative to a stationary reference object comprises detecting the moving speed by detecting a change in the distance between the carrier vehicle and the entrance of the conveying device per unit time.

Optionally, the distance between the carrier vehicle and the entrance is a distance between the carrier vehicle and an intersection line of the comb plate at the entrance.

Optionally, the distance between the carrier vehicle and the exit is a distance between the carrier vehicle and an intersection line of the comb plate at the exit.

Optionally, the prompt information is presented in an auditory form and/or a visual form.

According to another aspect of an embodiment of this disclosure, a monitoring apparatus for a conveying device is provided. The monitoring apparatus comprises: a processor; and a memory having stored thereon instructions which, when executed by the processor, cause the processor to perform the method according to any one of the preceding items.

According to another aspect of an embodiment of this disclosure, a monitoring device is provided. The monitoring device comprises one or more sensors and the monitoring apparatus as described above. The one or more sensors acquire data associated with a conveying state of a conveying device. The monitoring apparatus obtains the data from the one or more sensors.

According to another aspect of an embodiment of this disclosure, a conveying system is provided. The conveying system comprises a conveying device, one or more sensors and the monitoring device as described above. The one or more sensors acquire data associated with a conveying state of a conveying device. The monitoring apparatus obtains the data from the one or more sensors.

According to another aspect of an embodiment of this disclosure, a computer storage medium is provided, having instructions stored thereon, which, when executed by a processor, cause the processor to perform the monitoring method according to any one of the preceding items.

The monitoring method, monitoring apparatus and conveying system provided according to various aspects of an embodiment of this disclosure improve the safety of using the conveying device by tracking and monitoring various target conditions related to the carrier vehicle and issuing corresponding prompts.

BRIEF DESCRIPTION OF DRAWINGS

Through the following description of the embodiments of this disclosure in conjunction with the accompanying drawings, the aspects, features, and advantages of this disclosure will become clearer and easier to understand, where:

FIG. 1 illustrates a schematic diagram of a conveying system according to an embodiment of this disclosure;
FIG. 2 illustrates a schematic flowchart of a monitoring method according to an embodiment of this disclosure;
FIG. 3 illustrates a schematic process of a carrier vehicle for boarding a conveying device;
FIG. 4 illustrates a hardware block diagram of a monitoring apparatus according to an embodiment of this disclosure;
FIG. 5 illustrates a computer storage medium according to an embodiment of this disclosure; and
FIG. 6 illustrates a block diagram of a monitoring device according to an embodiment of this disclosure.

DETAILED DESCRIPTION

This disclosure will be described in detail below with reference to exemplary embodiments of this disclosure. However, this disclosure is not limited to the embodiments described herein and may be implemented in many different forms. The described embodiments are only used to make this disclosure thorough and complete and to fully convey the concept of this disclosure to those of ordinary skilled in the art. The features of the described various embodiments may be combined or replaced with each other, unless explicitly excluded or should be excluded according to the context.

Unless otherwise defined, technical or scientific terms used in this disclosure shall have the ordinary meanings understood by those of ordinary skill in the art to which this disclosure belongs. Words such as "first," "second," and similar terms used in this disclosure do not denote any order, quantity, or importance, but are merely used to distinguish different components.

In the drawings, the same reference signs denote components with the same or similar structures or functions, and repeated descriptions about them will be omitted in the following description.

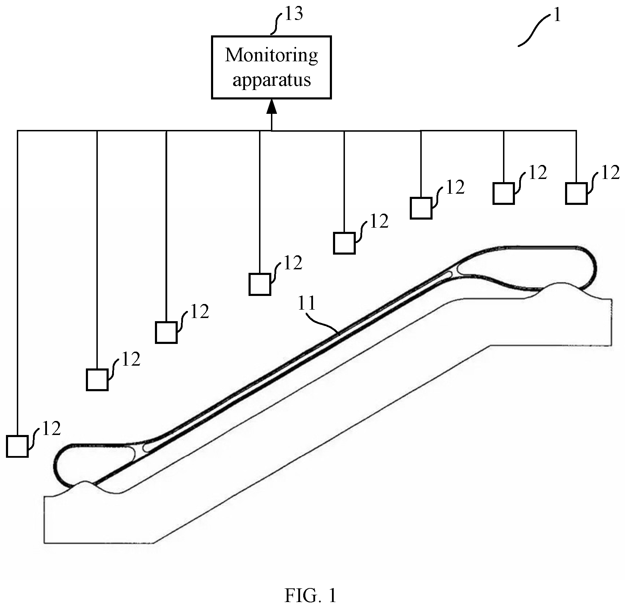

FIG. 1 illustrates a schematic diagram of a conveying system according to an embodiment of this disclosure.

As mentioned above, the conveying device involved in this disclosure is a device that conveys people or items from one location to another in application sites such as supermarkets, shopping malls, stations, airports, factories, and the like. Examples include, but are not limited to, escalators in supermarkets or shopping malls, luggage conveyors in airports, goods conveyors in factories, and the like. Depending on the environment of the application sites, the conveying direction of the conveying device may be horizontal, inclined upward, inclined downward, and the like.

As illustrated, a conveying system 1 according to an embodiment of this disclosure includes such a conveying device 11, one or more sensors 12 arranged near the conveying device 11, and a monitoring apparatus 13 according to an embodiment of this disclosure. The conveying direction of the conveying device 11 may be horizontal, inclined upward or inclined downward, which is not limited by this disclosure; this figure illustrates an inclined upward conveying direction as an example. One or more sensors 12 are capable of sensing a conveying state of the conveying device 11 and generating data regarding the conveying state. For example, the one or more sensors 12 may include an image sensor capable of capturing images or videos regarding the conveying device, an infrared sensor capable of sensing the arrival or passage of a person or object at a certain position, and a contact sensor capable of sensing a conveying speed of the conveying device 11 by contacting a surface of the conveyor of the conveying device.

The monitoring apparatus 13 according to an embodiment of this disclosure is capable of communicating with one or more sensors 12 to receive the captured data from the one or more sensors, and is capable of processing the data according to the monitoring method described below. As illustrated, the monitoring apparatus 13 may be independent of the one or more sensors 12.

For example, monitoring apparatus 13 may be a smartphone, a tablet, a personal computer, a server, or the like, that communicates with one or more sensors 12 via a wired or wireless network. Alternatively, however, the monitoring apparatus 13 may also be physically integrated with the one or more sensors 12. For example, the one or more sensors 12 may be one or more lenses in a smart camera, and the monitoring apparatus 13 may be a processor embedded in the smart camera.

The monitoring method performed by the monitoring apparartus 13 according to an embodiment of this disclosure is described below.

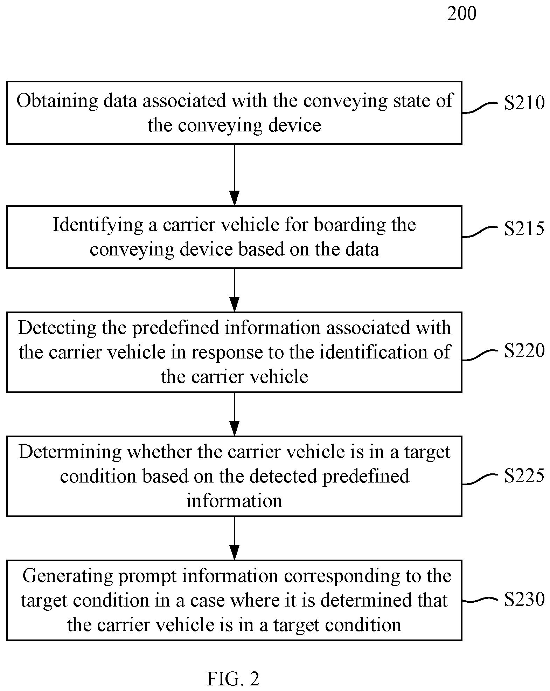

FIG. 2 illustrates a schematic flowchart of a monitoring method according to an embodiment of this disclosure.

Referring to FIG. 2, the monitoring method 200 according to an embodiment of this disclosure may include steps S210 to S230.

In step S210, data associated with the conveying state of the conveying device 11 is obtained. As described above in conjunction with FIG. 1, the monitoring apparatus 13 receives data associated with the conveying state of the conveying device 11 from one or more sensors 12, such as images and/or videos of the conveying device 11.

In step S215, a carrier vehicle for boarding the conveying device 11 is identified based on the data. The carrier vehicles herein include manual or automatic tools for carrying items that can ride on different conveying devices in different application sites, including, but not limited to, shopping carts in supermarkets, luggage carts in stations or airports, and goods handling vehicles in factories or warehouses, and the like.

Depending on the attributes of the data obtained in step S210, various currently known or future-developed algorithms may be used to identify the carrier vehicles for boarding the conveying device 11. Taking the data as image and/or video data as an example, the carrier vehicle may be identified from the image or video by using currently known image recognition algorithms such as disparity calculation, 3D reconstruction, and feature extraction. For example, the disparity between two images captured by a device similar to binocular camera refers to the horizontal offset of corresponding pixel points in the two images. By calculating the disparity values of corresponding pixel points, the depth information of each pixel point may be obtained. Such depth information may facilitate mapping each pixel point in the image to a corresponding point in 3D space, thereby obtaining a 3D point cloud representing the spatial positions of various objects in the shooting scene. By extracting features related to the shape, color, texture, and the like of the carrier vehicle within the 3D point cloud, it can be determined whether the carrier vehicle exists in the image. This disclosure does not limit the image recognition technology, and in order to avoid obscuring this disclosure, further details thereof will not be described herein.

In step S220, in response to the identification of the carrier vehicle, predefined information associated with the carrier vehicle is detected. The predefined information herein includes one or more of: the position of the carrier vehicle in the world reference system, whether the brake of the carrier vehicle is set in the braking position or the release position, the distance between the carrier vehicle and the entrance and/or exit of the conveying device, the distance between the carrier vehicle and an adjacent carrier vehicle, the dimension and/or quantity of loads on the carrier vehicle, the moving speed of the carrier vehicle, and/or other parameters that can directly or indirectly reflect the carrier vehicle itself or the relationship between the carrier vehicle and the conveying device, as well as information on the change of these other parameters over time.

In step S225, it is determined whether the carrier vehicle is in a target condition based on the detected predefined information. In step S230, in a case where it is determined that the carrier vehicle is in a target condition, prompt information corresponding to the target condition is generated.

The target conditions include, but are not limited to, at least one of: the carrier vehicle being proximity to an entrance of the conveying device; the carrier vehicle being proximity to an exit of the conveying device; the carrier vehicle being on the conveying device and having relative motion with the conveying device; the carrier vehicle being too close to an adjacent carrier vehicle; excessive loads being on the carrier vehicle; the fall of a load from the carrier vehicle and other conditions that are potentially dangerous or worth prompting people's attention.

Taking the airport as an example, the carrier vehicle 13 may be a luggage cart used in the airport to help passengers carry luggage, and the conveying device 11 may be a conveyor belt used in the airport to convey passengers and luggage carts.

For example, when a passenger enters the entrance of the conveyor belt with a luggage cart, they may forget to set the brake of the luggage cart (also referred to as a brake lever) to the braking position (i.e., lifting the brake lever), leaving the luggage cart in a slidable state. This is potentially dangerous; especially for an inclined upward or inclined downward conveyor belt, the slidable luggage cart may rapidly slide backward or plunge on the conveyor belt, thereby accidentally injuring passengers on or near the conveyor belt. In view of this, it is desirable to prompt the passenger to lift the brake lever of the luggage cart when the luggage cart is proximate to the entrance of the conveyor. Accordingly, the monitoring apparatus 13 may monitor whether the luggage cart is proximate to the entrance of the conveyor belt based on one or more of the aforementioned predefined information (i.e., step S225), and may generate prompt information presented in an auditory form and/or a visual form upon monitoring such condition (i.e., step S230). The prompt information may be voice information played through a speaker, text information or image information displayed through a display, and the like. For example, in a case where the monitoring apparatus 13 determines that the luggage cart is at the entrance of the conveyor belt, voice information may be broadcast through the speaker: "You are about to enter or have entered the conveyor, please lift the brake lever of the luggage cart!"

For example, when a passenger exits from the exit of a conveyor belt with a luggage cart, they may forget to set the brake of the luggage cart to a released position (i.e., pressing down the brake lever), leaving the luggage cart in a non-slidable state. This may cause the luggage cart to fail to exit the conveyor in time, thereby blocking passengers or luggage carts behind it, or even colliding with these passengers or luggage carts. In view of this, it is desirable to prompt the passenger to press down the brake lever of the luggage cart when the luggage cart exits the exit of the conveyor belt. Accordingly, monitoring apparatus 13 may monitor whether the luggage cart is proximate to the exit of the conveyor belt based on one or more of the aforementioned predefined information, and may generate prompt information upon monitoring such a condition. For example, in a case where the monitoring apparatus 13 determines that the luggage cart is at the exit of the conveyor, voice information may be broadcast through the speaker: "You are about to exit or have exited the conveyor. Please press down the brake lever of the luggage cart!"

For example, it is expected that the luggage cart remains stationary relative to the conveyor belt after it enters the conveyor belt, but it is also possible that the luggage cart moves relative to the conveyor belt after entry. This may occur when the passenger has not set the brake lever of the luggage cart to the braking position or has not fully braked the luggage cart (for example, the passenger is leaning on the luggage cart; and although the arm is pressing the brake lever, the luggage cart will be in a slidable state once the arm is lifted). This may cause the luggage cart to slide backward or plunge on the conveyor belt, or even accidentally injure passengers. In view of this, it is further desirable to continuously monitor whether relative motion occurs between the luggage cart and the conveyor belt after the luggage cart enters the conveyor belt. Accordingly, monitoring apparatus 13 may monitor whether the luggage cart is on the conveyor and moving relative to the conveyor based on one or more of the aforementioned predefined information (step S225) and may generate prompt information upon monitoring such a condition (step S230). For example, in a case where the monitoring apparatus 13 determines that the luggage cart is on the conveyor and moving relative to the conveyor, voice information may be broadcast through the speaker: "You are riding the conveyor, please keep the brake lever of the luggage cart lifted!"

For example, a situation may occur where two or more luggage carts are too close to each other on the conveyor belt, which in turn may result in collisions, friction, or blocking on the conveyor belt, causing damage to passengers, luggage carts, and/or items on the luggage carts. In view of this, it is further desirable to monitor whether a luggage cart is too close to an adjacent luggage cart (step S225), and to generate prompt information upon monitoring such a condition (step S230). For example, in a case where the monitoring apparatus 13 determines that a certain luggage cart is too close to an adjacent luggage cart, voice information may be broadcast through the speaker: "Attention, please, your luggage cart is too close to another luggage cart!"

For example, a situation may occur where a passenger stack too many pieces luggage on a luggage cart, which makes the luggage cart unstable and thus presents various safety hazards. For example, the luggage cart may tip over, luggage may fall, luggage may squeeze and collide with each other, the passenger's line of sight may be obstructed, or the passenger may suffer physical injury due to excessive force while pushing the luggage cart. In view of this, it is further desirable to monitor whether the luggage is excessively stacked on the luggage cart (step S225), and to generate prompt information upon monitoring such a condition (step S230). For example, in a case where the monitoring apparatus 13 determines that the luggage is excessively stacked on a certain luggage cart, voice information may be broadcast through the speaker: "The luggage is overloaded, please remove some of it!"

For example, regardless of whether the luggage is excessively stacked on the luggage cart, a situation may occur where luggage suddenly falls. Such a situation may cause other passengers or luggage carts to be blocked and is especially dangerous for an inclined upward or inclined downward conveyor belt, because the fallen luggage may roll rapidly and injure passengers on the conveyor belt or even pedestrians near the conveyor belt. In view of this, it is further desirable to monitor whether the luggage on the luggage cart falls (step S225), and to generate prompt information upon monitoring such a condition (step S230). For example, in a case where the monitoring apparatus 13 determines that luggage has fallen from a luggage cart, voice information may be broadcast through the speaker: "Luggage has fallen, please watch out and avoid it!".

Thus, monitoring method 200 and monitoring apparatus 13 for implementing the monitoring method according to this disclosure can detect the occurrence of one or more of the aforementioned target conditions and generate corresponding prompt information upon detecting the occurrence to enhance the safety of using the conveyors.

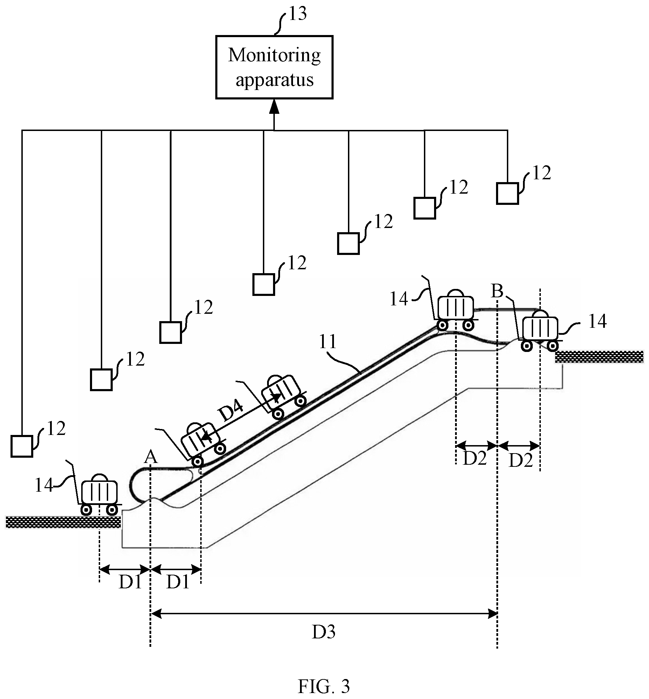

Hereinafter, taking the airport conveyor belt and the luggage cart as an example again, how steps S220 to S230 can be carried out for each of the aforementioned target conditions will be introduced in more detail with reference to FIG. 3.

FIG. 3 illustrates a schematic process of a carrier vehicle boarding a conveying device.

Referring to FIG. 3, the exemplary conveying device 11 is an inclined upward conveying device 11, the conveying direction of which is toward the upper right. The luggage cart 14 enters the entrance of the conveying device 11 from the left side of the conveying device 11, is conveyed by the conveying device 11 to the exit of the conveying device 11, and then leaves the conveying device 11 on the right side of the conveying device 11. Both the entrance and the exit of the conveying device 11 are provided with comb plates. Point A in the figure indicates the position of the intersection line of the comb plate at the entrance, and point B in the figure indicates the position of the intersection line of the comb plate at the exit.

In the first stage of the process, the luggage cart 14 travels from the left side of the conveying device 11 toward the entrance of the conveying device 11 to board the conveying device 11. One or more image sensors 12 arranged near the entrance of the conveying device 11 may sense the luggage cart 14, thereby generating images or videos containing the luggage cart 14. Step S210 performed by the monitoring apparatus 13 may include obtaining the images or videos from the image sensors 12. Step S215 performed by the monitoring apparatus 13 may include identifying the luggage cart 14 from the images or videos by performing an image recognition algorithm. In response to identifying the luggage cart 14, the purpose of step S220 and step S225 performed by the monitoring apparatus 13 may include identifying whether the luggage cart 14 is proximate to the entrance of the conveying device 11. Based on this, step S220 performed by the monitoring apparatus 13 may include detecting a distance D1 between the luggage cart 14 and the entrance of the conveying device 11. As illustrated, distance D1 is the distance between a geometric center of the luggage cart and the point A, which indicates the intersection line of the comb plate at the entrance. Step S225 performed by the monitoring apparatus 13 may include determining whether the luggage cart 14 is at the entrance of the conveying device 11 based on the detected distance D1. For example, the luggage cart 14 is determined to be proximate to the entrance of the conveying device 11 based on the distance D1 not exceeding a first threshold distance T1. In a case where it is determined that the luggage cart 14 is approaching the entrance of the conveying device 11, step S230 performed by the monitoring apparatus 13 may include generating prompt information in the form of voice, text, image, or other auditory or visual forms: "You are about to enter or have entered the conveyor, please lift the brake lever of the luggage cart!". The prompt information may be broadcast or displayed via a speaker, a display, or the like, that is in communication with monitoring apparatus 13 or belongs to monitoring apparatus 13 itself.

The distance D1 herein may refer to the distance from the entrance to the luggage cart 14 before it boards the conveying device 11 (i.e., the luggage cart 14 is located on the left side of the entrance of the conveying device 11, as shown in the figure), or the distance from the entrance to the luggage cart 14 when the luggage cart 14 is already on the conveying device 11 (i.e., the luggage cart 14 is located to the right side of the entrance of the conveying device 11, as shown in the figure). That is, both the luggage cart 14 being about to board the conveying device 11 and having just boarded the conveying device 11 are regarded as being proximate to the entrance of the conveying device 11.

In the second stage of the process, after the luggage cart 14 boards the conveying device 11, i.e., after the geometric center of the luggage cart 14 in the figure passes the position of the intersection line A of the comb plate at the entrance, one or more image sensors 12 arranged near the conveying device 11 may sense the luggage cart 14, thereby generating images or videos containing the luggage cart 14. Step S210 performed by the monitoring apparatus 13 may include obtaining the captured images or videos from the image sensors 12. Step S215 performed by the monitoring apparatus 13 may include identifying the luggage cart 14 from the images or videos by performing an image recognition algorithm. In response to identifying luggage cart 14, the purpose of step S220 and step S225 performed by the monitoring apparatus 13 may include detecting whether the luggage cart 14 is on the conveying device 11 and detecting whether relative motion exists between the luggage cart 14 and the conveying device 11.

To detect whether the luggage cart 14 is on the conveying device 11 and whether relative motion exists between the luggage cart 14 and the conveying device 11, step S220 performed by the monitoring apparatus 13 may include detecting both a distance D1 between the luggage cart 14 and the entrance of the conveying device 11 and a distance D2 between the luggage cart 14 and the exit of the conveying device 11, and detecting the change in the distance D1 or the distance D2 over time. As illustrated, the distance D1 is the distance between the geometric center of the luggage cart 14 and point A, which is the intersection line of the comb plate at the entrance of the conveying device 11; and the distance D2 is the distance between the geometric center of the luggage cart 14 and point B, which is the intersection line of the comb plate at the exit of the conveying device 11. Step S225 performed by the monitoring apparatus 13 may include determining that the luggage cart 14 is on the conveying device 11 based on both the distance D1 and the distance D2 being less than a distance D3 between point A and point B, and determining that relative motion exists between the luggage cart 14 and the conveying device 11 based on the distance D1 remaining constant or decreasing over time, or the distance D2 remaining constant or increasing over time.

It can be understood that when the luggage cart 14 is already on the conveying device 11, but the distance D1 between its geometric center and the intersection line A of the comb plate at the entrance remains constant over time, it indicates that the luggage cart 14 is not moving with the conveying device 11; or when the distance D1 between its geometric center and the intersection line A of the comb plate at the entrance even decreases over time, it indicates that the luggage cart 14 is moving in a direction opposite to the conveying direction of the conveying device 11. This is undesirable; especially for the inclined upward conveying device 11 as illustrated, backward movement of the luggage cart 14 can easily cause injuries to multiple passengers.

Furthermore, step S220 performed by the monitoring apparatus 13 may further include detecting the moving speed of the luggage cart 14 relative to a stationary reference object, i.e., an absolute speed. For example, the stationary reference object may be the intersection line of the comb plate at the entrance of the conveying device 11, and the moving speed of the luggage cart 14 may be the change of the distance D1 between the luggage cart 14 and the intersection line of the comb plate at the entrance per unit time, i.e.,

$$v1 = \frac{\Delta D1}{\Delta t}$$

. Step S225 performed by the monitoring apparatus 13 may further include determining that the relative movement exists between the luggage cart 14 and the conveying device 11 based on the distance D1 increases over time and the absolute value of a difference between the moving speed $v1$ of the luggage cart 14 and the conveying speed $v2$ of the conveying device 11 exceeding a speed difference threshold $T_v$, i.e., $|\Delta v| = |v1 - v2| \geq T_v$.

It can be understood that when the luggage cart 14 is already on the conveying device 11 and the distance D1 between its geometric center and the intersection line, namely the point A, of the comb plate at the entrance increases over time, the luggage cart 14 is not necessarily stationary relative to the conveying device. It may also move relative to the conveying device in the conveying direction or in a direction opposite to the conveying direction. For example, the luggage cart 14 may be in a movable state due to not being effectively braked, i.e., it can move forward or backward relative to the conveyor. In one instance, the luggage cart 14 may move in the conveying direction at a speed greater than the conveying speed of the conveying device 11. When this moving speed is only slightly greater than the conveying speed (e.g., when a passenger pushes the luggage cart 14 while walking slowly on the conveyor), the moving speed is still within an acceptable range. However, when the moving speed is significantly greater than the conveying speed (e.g., on an inclined downward conveying device 11 where the slope causes the moving speed of the luggage cart 14 to be much higher than the conveying speed of the conveying device 11) it may cause the luggage cart 14 to lose control and result in injuries to multiple passengers. In another instance, the luggage cart 14 may move in the conveying direction at a speed less than the conveying speed, i.e., although the luggage cart 14 is moving toward the exit of the conveying device 11, its moving speed is lower than the conveying speed of the conveying device 11. When this moving speed is only slightly lower than the conveying speed (e.g., when an obstacle such as a small stone reduces the forward speed of the luggage cart 14), the moving speed is still within an acceptable range. However, when the moving speed is significantly lower than the conveying speed, it may cause blockages or even collisions. Therefore, determining that relative motion exists between the luggage cart 14 and the conveying device 11, when the absolute value of the difference between the moving speed $v1$ of the luggage cart 14 and the conveying speed $v2$ of the conveying device 11 exceeds a speed difference threshold $T_v$, is beneficial for enhancing safety.

Upon determining that the luggage cart 14 is on the conveying device 11 and that relative motion exists between the luggage cart 14 and the conveying device 11 as described above, step S230 performed by the monitoring apparatus 13 may include generating prompt information in the form of voice, text, image, or other auditory or visual forms: "You are riding the conveyor, please keep the brake lever of the luggage cart lifted!". Similarly, the prompt information may be broadcast or displayed via a speaker, a display, or the like, that is in communication with the monitoring apparatus 13 or belongs to the monitoring apparatus 13 itself.

It should be noted that the conveying speed of the conveying device 11 may generally be obtained directly from a controller, a control cabinet, or a control center of the conveying device 11. The monitoring apparatus 13 may track the change in the distance D1 between the luggage cart 14 and the intersection line of the comb plate at the entrance of the conveying device 11 over time based on positions of the luggage cart 14 identified in a plurality of temporally continuous image frames captured by one or more image sensors 12, thereby calculating the moving speed of the luggage cart 14.

In the third stage of the process, when the luggage cart 14 reaches the exit of the conveying device 11 and is about to exit the conveying device 11, one or more image sensors 12 arranged near the exit of the conveying device 11 may sense the luggage cart 14, thereby generating images or videos containing the luggage cart 14. Step S210 performed by the monitoring apparatus 13 may include obtaining the images or videos from the one or more image sensors 12. Step S215 performed by the monitoring apparatus 13 may include identifying the luggage cart 14 from the images or videos by performing an image recognition algorithm. In response to identifying the luggage cart 14, the purpose of step S220 and step S225 performed by the monitoring apparatus 13 may include identifying whether the luggage cart 14 is proximate to the exit of the conveying device 11. Based on this, step S220 performed by the monitoring apparatus 13 may include detecting a distance D2 between the luggage cart 14 and the exit of the conveying device 11. As illustrated, the distance D2 is the distance between the geometric center of the luggage cart and point B, which indicates the intersection line of the comb plate at the exit. Step S225 performed by the monitoring apparatus 13 may include determining whether the luggage cart 14 is at the exit of the conveying device 11 based on the detected distance D2. For example, the luggage cart 14 is determined to be proximate to the exit of the conveying device 11 based on the distance D2 not exceeding a second threshold distance $T_2$. Upon determining that the luggage cart 14 is proximate to the exit of the conveying device 11, step S230 performed by the monitoring apparatus 13 may include generating prompt information in the form of voice, text, image, or other auditory or visual forms: "You are about to exit or have exited the conveyor, please press down the brake lever of the luggage cart!". Similarly, the prompt information may be broadcast or displayed via a speaker, a display, or the like, that is in communication with the monitoring apparatus 13 or belongs to the monitoring apparatus 13 itself.

The distance D2 herein may refer to the distance from the exit to the luggage cart 14 before it leaves the exit (i.e., the luggage cart 14 is located on the left side of the exit of the conveying device 11, as shown in the figure), or may be the distance from the exit to the luggage cart when the luggage cart 14 has just left the conveying device 11 (i.e., the luggage cart 14 is located on the right side of the exit of the conveying device 11, as shown in the figure). That is, both the luggage cart 14 being about to exit the conveying device 11 and having just left the conveying device 11 are regarded as being proximate to the exit of the conveying device 11.

Furthermore, in all stages of the process, especially in the first stage, when the luggage cart 14 travels from the left side of the conveying device 11 toward the entrance of the conveying device 11 to board the conveying device 11, in response to identifying the luggage cart 14, the purpose of step S220 and step S225 performed by the monitoring apparatus 13 may further include identifying whether there are excessive loads on the luggage cart 14. Based on this, step S220 performed by the monitoring apparatus 13 may include detecting dimensions of the luggage on the luggage cart 14, such as a total length L, a total width W, and a total height H of the luggage, and a total volume V obtained therefrom. Step S225 performed by the monitoring apparatus 13 may include determining that there is excessive luggage based on the dimensions of the luggage exceeding corresponding dimension thresholds. For example, step S225 may include determining that there is excessive luggage on the luggage cart 14 based on one or more of the following, or a combination of one or more of the following: the total length L of the luggage exceeding a length threshold $T_L$, the total width W of the load exceeding a width threshold $T_W$, the total height of the load exceeding a height threshold $T_H$, and the total volume V of the load exceeding a volume threshold $T_V$. For example, in an instance, step S225 includes determining that there is excessive luggage based on the total volume V exceeding the volume threshold $T_V$, or based on the total height H exceeding the height threshold $T_H$ even though the total volume V does not exceed the volume threshold $T_V$. In a case where it is determined that there is excessive luggage, step S230 performed by the monitoring apparatus 13 may include generating prompt information in the form of voice, text, image, or other auditory or visual forms: "The luggage is overloaded, please remove some of it!". Similarly, the prompt information may be broadcast or displayed via a speaker, a display, or the like, that is in communication with the monitoring apparatus 13 or belongs to the monitoring apparatus 13 itself.

Furthermore, in all stages of the process, especially in the second stage, after the luggage cart 14 boards the conveying device 11, in response to identifying the luggage cart 14, the purpose of step S220 and step S225 performed by the monitoring apparatus 13 may further include identifying whether luggage on the luggage cart 14 has fallen. Based on this, step S220 performed by the monitoring apparatus 13 may further include detecting changes in dimensions of the luggage on the luggage cart 14, including, for example, a change in the total length of the luggage $(L1 - L2)/L1$, a change in the total width $(W1 - W2)/W1$, a change in the total height $(H1 - H2)/H1$, and a change in the total volume $(V1 - V2)/V1$ obtained therefrom. Wherein, L1, W1, H1, and V1 are the total length, total width, total height, and total volume of the luggage before the change, respectively; and L2, W2, H2, and V2 are the total length, total width, total height, and total volume of the luggage after the change, respectively. Step S225 performed by the monitoring apparatus 13 may further include determining that luggage has fallen based on a percentage of the aforementioned dimensional change exceeding a predetermined percentage threshold T%. In one instance, step S225 includes determining that luggage has fallen based on the total volume of the luggage decreasing by more than 30%. In a case where it is determined that luggage has fallen, step S230 performed by the monitoring apparatus 13 may further include generating prompt information in the form of voice, text, image, or other auditory or visual forms: "Attention, please, your luggage cart is too close to others!". Similarly, the prompt information may be broadcast or displayed via a speaker, a display, or the like, that is in communication with the monitoring apparatus 13 or belongs to the monitoring apparatus 13 itself.

Furthermore, in all stages of the process, especially in the second stage, after the luggage cart 14 boards the conveying device 11, in response to identifying the luggage cart 14, the purpose of step S220 and step S225 performed by the monitoring apparatus 13 may further include identifying whether the luggage cart 14 is too close to an adjacent luggage cart 14. Based on this, step S220 performed by the monitoring apparatus 13 may further include detecting a distance D4 between the luggage cart 14 and the adjacent luggage cart; for example, the distance D4 may be the distance between right front wheels of two adjacent luggage carts 14. Step S225 performed by the monitoring apparatus 13 may further include determining that the luggage cart 14 is too close to the adjacent luggage cart based on the distance D4 being less than a third threshold distance T3. In a case where it is determined that the luggage cart 14 is too close to the adjacent luggage cart, step S230 performed by the monitoring apparatus 13 may include generating prompt information in the form of voice, text, or image: "Luggage has fallen, please watch out and avoid it!". Similarly, the prompt information may be broadcast or displayed via a speaker, a display, or the like, that is in communication with the monitoring apparatus 13 or belongs to the monitoring apparatus 13 itself.

Thus, the monitoring method 200 and the monitoring apparatus 13 according to the embodiments of this disclosure are capable of avoiding hazards or reducing the severity of consequences caused by such hazards by performing monitoring on a conveyor, especially on a carrier vehicle boarding the conveyor, for target conditions such as the carrier vehicle being proximate to the entrance of the conveyor, the carrier vehicle being proximate to the exit of the conveyor, the carrier vehicle being on the conveyor and having relative motion with the conveyor, the carrier vehicle being too close to an adjacent carrier vehicle, excessive loads being on the carrier vehicle, and a load has fallen from the carrier vehicle, and by generating appropriate prompt information upon monitoring these target conditions.

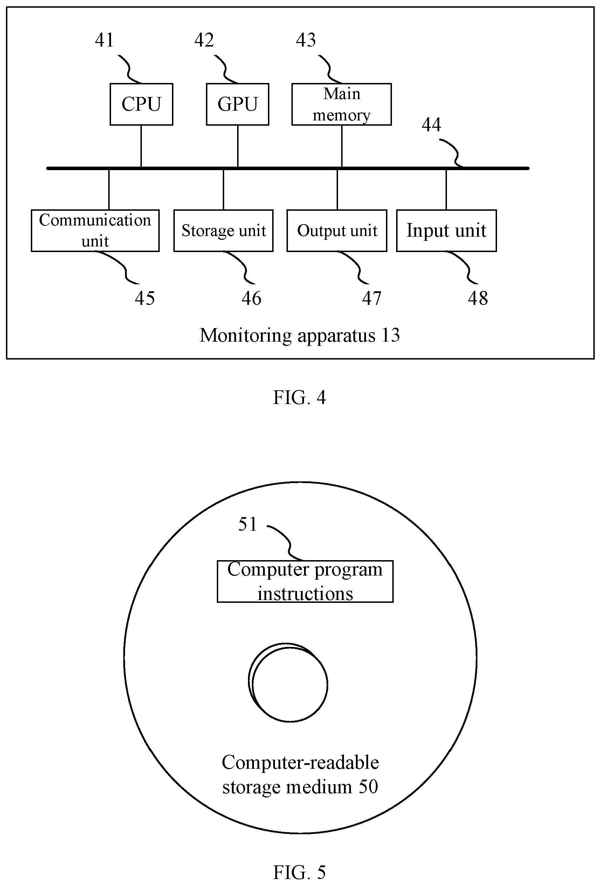

FIG. 4 is a hardware block diagram of the monitoring apparatus 13 according to an embodiment of this disclosure.

The monitoring apparatus 13 according to an embodiment of this disclosure at least includes a memory for storing computer program instructions and a processor for executing the computer program instructions. When the computer program instructions are loaded and executed by the processor, the processor performs the aforementioned monitoring method 200.

As an example, the monitoring apparatus 13 shown in FIG. 4 may include a central processing unit (CPU) 41, a graphics processing unit (GPU) 42, and a main memory 43, which are connected to each other via a bus 44. The central processing unit (CPU) 41 and/or the graphics processing unit (GPU) 42 may be used as the aforementioned processor, and the main memory 33 may be used as the aforementioned memory for storing computer program instructions. In addition, the monitoring apparatus 13 may also include a communication unit 45, a storage unit 46, an output unit 47, and an input unit 48, and these units are also connected to the bus 44. The output unit 47 may include a speaker and/or a display that can be configured to broadcast or display the aforementioned prompt information.

FIG. 5 illustrates a computer storage medium according to an embodiment of this disclosure.

As illustrated in FIG. 5, a computer-readable storage medium 50 according to an embodiment of this disclosure store computer program instructions 51. When the computer program instructions 51 are executed by a processor, the aforementioned monitoring method 200 is performed.

The computer-readable storage medium 50 includes, but is not limited to, for example, volatile memory and/or non-volatile memory, and/or any recording medium having the same function as would be conceivable to those of ordinary skill in the art to which this disclosure belongs. The volatile memory may include, for example, a Random Access Memory (RAM) and/or a cache memory, and the like. The non-volatile memory may include, for example, a Read-Only Memory (ROM), a hard disk, a flash memory, an optical disk, a magnetic disk, and the like.

The computer-readable program instructions 51 may be assembler instructions, Instruction Set Architecture (ISA) instructions, machine instructions, machine-dependent instructions, microcode, firmware instructions, state-setting data, configuration data for integrated circuitry, or source code or object code written in any combination of one or more programming languages, including an obj1ect-oriented programming language such as Smalltalk, C++, or the like, and procedural programming languages, such as the "C" programming language or similar programming languages.

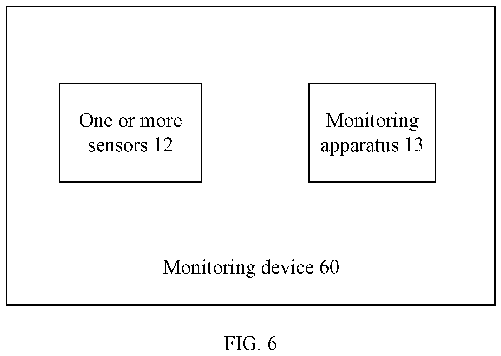

FIG. 6 illustrates a block diagram of a monitoring device according to an embodiment of this disclosure.

Referring to FIG. 6, the monitoring device 60 may include one or more sensors 12 and a monitoring apparatus 13. For example, the monitoring device 60 may be a smart camera, which includes one or more lenses capable of capturing images and/or videos of the conveying device and the monitoring apparatus 13. The monitoring apparatus 13 obtains the images and/or videos from the one or more lenses to perform the aforementioned monitoring method 200.

The monitoring method 200, the monitoring apparatus 13, the monitoring device 60, and the conveying system 1 according to the embodiments of this disclosure described above with reference to Figs. 1 to 6 can realize tracking and monitoring of various target conditions related to the carrier vehicle 14 for boarding the conveying device 11 during the entire conveying process of the conveying device 11, and generate corresponding prompt information upon monitoring the occurrence of these target conditions, thereby enhancing the safety of using the conveyor.

Those skilled in the art should understand that the above specific embodiments are merely examples and not limitations. Various modifications, combinations, partial combinations, and substitutions can be made to the embodiments of this disclosure according to design requirements and other factors, as long as they are within the scope of the appended claims or their equivalents, they belong to the scope of rights to be protected by this disclosure.

**Claims**

1. A monitoring method for a conveying device, comprising:

   obtaining data associated with a conveying state of the conveying device;
   identifying a carrier vehicle for boarding the conveying device based on the data;
   detecting predefined information associated with the carrier vehicle in response to identifying the carrier vehicle;
   determining whether the carrier vehicle is in a target condition based on the detected predefined information; and
   generating prompt information corresponding to the target condition in a case where it is determined that the carrier vehicle is in the target condition.

2. The monitoring method according to claim 1, wherein the target condition comprises at least one of:

   the carrier vehicle being proximity to an entrance of the conveying device;
   the carrier vehicle being proximity to an exit of the conveying device;
   the carrier vehicle being on the conveying device and having relative motion with the conveying device;
   the carrier vehicle being too close to an adjacent carrier vehicle;
   excessive loads being on the carrier vehicle; and/or
   fall of a load from the carrier vehicle.

3. The method according to claim 2, wherein,

   the target condition comprises the carrier vehicle being proximity to an entrance of the conveying device;
   the predefined information comprises a distance between the carrier vehicle and the entrance of the conveying device;
   the determining comprises: determining that the carrier vehicle is proximity to the entrance based on the distance not exceeding a first threshold distance; and
   the prompt information comprises information for prompting to set a brake of the carrier vehicle to a brake position.

4. The method according to claim 2, wherein,

the target condition comprises the carrier vehicle being proximity to an exit of the conveying device;
the predefined information comprises a distance between the carrier vehicle and the exit of the conveying device;
the determining comprises: determining that the carrier vehicle is proximity to the exit based on the distance not exceeding a second threshold distance; and
the prompt information comprises information for prompting to set a brake of the carrier vehicle to a release position.

5. The method according to claim 2, wherein,

the target condition comprises the carrier vehicle being on the conveying device and having relative motion with the conveying device;
the predetermined information comprises a distance between the carrier vehicle and the entrance and a distance between the carrier vehicle and the exit;
the determining that the carrier vehicle is on the conveying device comprises: determining that the carrier vehicle is on the conveying device based on both the distance between the carrier vehicle and the entrance and the distance between the carrier vehicle and the exit being less than a distance between the entrance and the exit; and
the prompt information comprises information for prompting to set a brake of the carrier vehicle to a brake position.

6. The method according to claim 5, wherein,

the predefined information further comprises a change in the distance between the carrier vehicle and the entrance over time; and
the determining that the carrier vehicle has relative motion with the conveying device comprises: determining that the carrier vehicle has relative motion with the conveying device based on the distance between the carrier vehicle and the entrance being constant or decreasing over time.

7. The method according to claim 6, wherein,

the predefined information further comprises a moving speed of the carrier vehicle relative to a stationary reference object and a conveying speed of the conveying device; and
the determining that the carrier vehicle has relative motion with the conveying device further comprises: determining that the carrier vehicle has relative motion with the conveying device based on the distance between the carrier vehicle and the entrance increasing over time and an absolute value of a difference between the moving speed of the carrier vehicle and the conveying speed exceeding a speed difference threshold.

8. The method according to claim 1, wherein,

the target condition comprises the carrier vehicle being too close to an adjacent carrier vehicle;
the predefined information comprises a distance between the carrier vehicle and the adjacent carrier vehicle;
the determining comprises: determining that the carrier vehicle is too close to the adjacent carrier vehicle based on the distance between the carrier vehicle and the adjacent carrier vehicle being less than a third threshold distance, and
the prompt information comprises information for prompting that the carrier vehicle is too close to the adjacent carrier vehicle.

9. The method according to claim 1, wherein,

the target condition comprises excessive loads being on the carrier vehicle;
the predefined information comprises a dimension of the loads on the carrier vehicle;
the determining comprises: determining that the excessive loads are on the carrier vehicle based on the dimension of the loads exceeding a dimension threshold; and
the prompt information comprises information for prompting to reduce the loads.

10. The method according to claim 1, wherein,

the target condition comprises fall of a load from the carrier vehicle;
the predefined information comprises a change in a dimension of the loads on the carrier vehicle over time;
the determining comprises: determining the fall of the load from the carrier vehicle based on a percentage of the dimension of the loads decreasing over time exceeding a percentage threshold; and
the prompt information comprises information for prompting the fall of the load from the carrier vehicle.

11. The method according to claim 4, wherein,

detecting the moving speed of the carrier vehicle relative to a stationary reference object comprises: detecting the moving speed by detecting a change in the distance between the carrier vehicle and the entrance of the conveying device per unit time.

12. The method according to claim 3, 5 or 11, wherein, the distance between the carrier vehicle and the entrance is a distance between the carrier vehicle and an intersection line of the comb plate at the entrance.

13. The method according to claim 4 or 5, wherein, the distance between the carrier vehicle and the exit is a distance between the carrier vehicle and an intersection line of the comb plate at the exit.

14. The method according to claim 1, wherein, the prompt information is presented in an auditory form and/or a visual form.

15. A monitoring apparatus for a conveying device, comprising:

a processor; and
a memory having stored thereon instructions which, when executed by the processor, cause the processor to perform the method according to any of claims 1-14.

16. A monitoring device, comprising:

one or more sensors, configured to acquire data associated with a conveying state of a conveying device; and
the monitoring apparatus according to claim 15, wherein the monitoring apparatus obtains the data from the one or more sensors.

17. A conveying system, comprising:

a conveying device;
one or more sensors, configured to acquire data associated with a conveying state of the conveying device; and
the monitoring apparatus according to claim 15, wherein the monitoring apparatus obtains the data from the one or more sensors.

18. A computer storage medium having stored thereon instructions which, when executed by a processor, cause the processor to perform the method according to any of claims 1-14.

13
Monitoring apparatus

1

12

12

12

12

12

12

12

12

11

FIG. 1

200

Obtaining data associated with the conveying state of the conveying device — S210

Identifying a carrier vehicle for boarding the conveying device based on the data — S215

Detecting the predefined information associated with the carrier vehicle in response to the identification of the carrier vehicle — S220

Determining whether the carrier vehicle is in a target condition based on the detected predefined information — S225

Generating prompt information corresponding to the target condition in a case where it is determined that the carrier vehicle is in a target condition — S230

FIG. 2

FIG. 3

41    42    43

| CPU | GPU | Main memory |

44

| Communication unit | Storage unit | Output unit | Input unit |

45    46    47    48

Monitoring apparatus 13

FIG. 4

51

| Computer program instructions |

Computer-readable storage medium 50

FIG. 5

FIG. 6

## INTERNATIONAL SEARCH REPORT

| International application No. |
| --- |
| **PCT/CN2024/114804** |

### A. CLASSIFICATION OF SUBJECT MATTER

H04N7/18(2006.01)i; B65G1/00(2006.01)i

According to International Patent Classification (IPC) or to both national classification and IPC

### B. FIELDS SEARCHED

Minimum documentation searched (classification system followed by classification symbols)

IPC: H04N7/-; B65G1/-

Documentation searched other than minimum documentation to the extent that such documents are included in the fields searched

Electronic data base consulted during the international search (name of data base and, where practicable, search terms used)

CNTXT: ENTXTC; CNKI: 搬运车, 板车, 出, 出口, 传输装置, 传送带, 传送链, 传送装置, 掉落, 告警, 购物车, 滑动, 减少, 进口, 警告, 警示, 距离, 链条, 入口, 杀车, 刹车, 上, 输送带, 输送链, 输送线, 输运带, 提示, 提醒, 通知, 推送, 拖车, 脱落, 位移, 物品, 下, 行李车, 运输带, 运送带, 运载, 运载物, 震动, 振动, 致动, 制动, 减速; VEN; ENTXT; IEEE: belt, carrier, chain, displacement, distance, entrance, in, inlet, out, outlet, luggage cart, shopping cart, mov+, conve+, transport+, break+, enter+, stop+, brak+, slid+, fall+.

### C. DOCUMENTS CONSIDERED TO BE RELEVANT

| Category* | Citation of document, with indication, where appropriate, of the relevant passages | Relevant to claim No. |
| --- | --- | --- |
| PX | CN 117201736 A (KONE ELEVATORS CO., LTD. et al.) 08 December 2023 (2023-12-08) claims 1-18 | 1-18 |
| X | CN 109843749 A (OPEX CORP.) 04 June 2019 (2019-06-04) description, paragraphs 39-130, and figures 1-13 | 1-7, 9-18 |
| Y | CN 109843749 A (OPEX CORP.) 04 June 2019 (2019-06-04) description, paragraphs 39-130, and figures 1-13 | 2, 8 |
| Y | KR 20220056394 A (SEMES CO., LTD.) 06 May 2022 (2022-05-06) description, paragraphs 51-63, and figures 1-6 | 2, 8 |
| A | DE 102004047018 A1 (GRENZEBACH ONERO GMBH) 30 March 2006 (2006-03-30) entire document | 1-18 |
| A | CN 111153144 A (GUANGDONG TOPSTAR TECHNOLOGY CO., LTD.) 15 May 2020 (2020-05-15) entire document | 1-18 |

☑ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 September 2024** | **16 October 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/114804**

| C. | DOCUMENTS CONSIDERED TO BE RELEVANT | |
|---|---|---|
| Category* | Citation of document, with indication, where appropriate, of the relevant passages | Relevant to claim No. |
| A | CN 110713101 A (HITACHI, LTD.) 21 January 2020 (2020-01-21) entire document | 1-18 |

Form PCT/ISA/210 (second sheet) (July 2022)

**INTERNATIONAL SEARCH REPORT**
**Information on patent family members**

International application No.

**PCT/CN2024/114804**

| Patent document cited in search report | | | Publication date (day/month/year) | Patent family member(s) | | | Publication date (day/month/year) |
|---|---|---|---|---|---|---|---|
| CN | 117201736 | A | 08 December 2023 | None | | | |
| CN | 109843749 | A | 04 June 2019 | JP | 2021098610 | A | 01 July 2021 |
| | | | | JP | 7137653 | B2 | 14 September 2022 |
| | | | | WO | 2018027045 | A1 | 08 February 2018 |
| | | | | JP | 6850867 | B2 | 31 March 2021 |
| | | | | CA | 3032968 | A1 | 08 February 2018 |
| | | | | CA | 3032968 | C | 30 June 2020 |
| | | | | AU | 2017306566 | A1 | 11 April 2019 |
| | | | | AU | 2017306566 | B2 | 18 February 2021 |
| | | | | US | 2018037412 | A1 | 08 February 2018 |
| | | | | US | 10589930 | B2 | 17 March 2020 |
| | | | | AU | 2021200584 | A1 | 04 March 2021 |
| | | | | AU | 2021200584 | B2 | 06 April 2023 |
| | | | | JP | 2022172274 | A | 15 November 2022 |
| | | | | AU | 2022252707 | A1 | 03 November 2022 |
| | | | | EP | 3507216 | A1 | 10 July 2019 |
| | | | | EP | 3507216 | B1 | 20 January 2021 |
| | | | | MX | 2019001508 | A1 | 06 September 2019 |
| | | | | NZ | 751645 | A2 | 31 July 2010 |
| | | | | JP | 2019524602 | W | 05 September 2019 |
| | | | | SG | 11201901017 | A1 | 28 March 2019 |
| | | | | IN | 201917008502 | A | 31 May 2019 |
| | | | | SG | 11201901017 | B | 10 January 2023 |
| KR | 20220056394 | A | 06 May 2022 | KR | 102606070 | B1 | 24 November 2023 |
| DE | 102004047018 | A1 | 30 March 2006 | DE | 102004047018 | B4 | 14 September 2017 |
| CN | 111153144 | A | 15 May 2020 | WO | 2021143659 | A1 | 22 July 2021 |
| | | | | CN | 111153144 | B | 30 November 2021 |
| CN | 110713101 | A | 21 January 2020 | JP | 2020007133 | A | 16 January 2020 |
| | | | | JP | 7001557 | B2 | 19 January 2022 |
| | | | | CN | 110713101 | B | 17 November 2020 |

Form PCT/ISA/210 (patent family annex) (July 2022)

REFERENCES CITED IN THE DESCRIPTION

**Patent documents cited in the description**

- CN 202311107431